(19) **Europäisches Patentamt**
**European Patent Office**
**Office européen des brevets**

(11) **EP 2 825 321 B1**

(12) **EUROPEAN PATENT SPECIFICATION**

(45) Date of publication and mention
of the grant of the patent:
**24.04.2019 Bulletin 2019/17**

(51) Int Cl.:
***B07C 5/342*** *(2006.01)*  ***B07C 5/36*** *(2006.01)*
***B07C 5/10*** *(2006.01)*  ***G01N 21/87*** *(2006.01)*

(21) Application number: **13711606.7**

(86) International application number:
**PCT/EP2013/055240**

(22) Date of filing: **14.03.2013**

(87) International publication number:
**WO 2013/135816 (19.09.2013 Gazette 2013/38)**

(54) **SORTING AGGREGATE MATERIAL**

SORTIEREN VON AGGREGATMATERIAL

TRI DE MATÉRIAU AGRÉGAT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.03.2012 GB 201204676**

(43) Date of publication of application:
**21.01.2015 Bulletin 2015/04**

(73) Proprietor: **De Beers UK Ltd**
**London EC1N 6RA (GB)**

(72) Inventors:
• **DAVIES, Nicholas Matthew**
**Reading**
**Berkshire RG6 3DU (GB)**
• **HONG, Qi He**
**Guildford**
**Surrey GU2 9RJ (GB)**
• **POWELL, Graham Ralph**
**Twyford**
**Berkshire RG10 0EX (GB)**

• **POULTER, Trevor**
**Hook**
**Hampshire RG27 9TW (GB)**
• **PORTSMOUTH, Andrew**
**Windsor**
**Berkshire SL4 1JJ (GB)**

(74) Representative: **Talbot-Ponsonby, Daniel**
**Frederick**
**Marks & Clerk LLP**
**Fletcher House**
**Heatley Road**
**The Oxford Science Park**
**Oxford OX4 4GE (GB)**

(56) References cited:
**EP-A1- 2 392 414      EP-A1- 2 392 414**
**EP-A2- 0 341 096      GB-A- 2 199 657**
**GB-A- 2 225 107      GB-A- 2 225 107**
**US-A- 6 096 991**

## Description

## Technical field

The invention relates to the classification of stones in aggregate material. More particularly, the invention relates to one or more of the identification of diamond containing material, the classification of diamond containing material as boart and the sizing of diamond containing material.

## Background

The output of a diamond mine can be split broadly into three categories: non-diamond material, boart; and gemstone quality diamond (*i.e.* rough stones from which gemstones can realistically be cut).. It is an important part of the mining and sorting process to identify and sort each of the categories of material

As used herein, the term "boart" encompasses imperfectly crystallised diamonds including few clear portions. Boart is of little use in the production of cut and polished gemstones but may have industrial applications such as drilling, cutting and polishing. As used herein, the term "gemstone quality diamond" encompasses diamonds which are not boart diamonds and may therefore be useful in the production of cut gemstones.

Current methods of sorting goods from a diamond mine include manual sorting undertaken by manual operatives. In such methods, operatives are required to measure and test the discrete stones of aggregate material to determine whether they comprise diamond material, are boart and to determine their size and shape. GB2199657 describes a method of sorting diamond from gangue. GB2225107 describes an apparatus configured to determine the shape and size of an object e.g. diamonds or foodstuff.

## Summary of the invention

According to the invention in a first aspect, there is provided a sorting apparatus for classifying candidate rough gemstones in aggregate material. The apparatus comprises a transport system for individually transporting a stone from the aggregate material to at least one measurement location, a measurement system configured to determine, at the at least one measurement location, the shape of the stone and whether the stone comprises diamond material, and, where the stone does comprise diamond material, whether the stone comprises boart. The apparatus further comprises a dispenser system configured to dispense the stone from the transport system to one of a plurality of locations in dependence on the determination of the measurement system.

Optionally, the measurement system comprises a false detection device for determining whether the stone comprises diamond material.

Optionally, the false detection device is configured to determine whether the stone comprises diamond material using Raman spectroscopy, and comprises a light source arranged to emit light onto the stone, and a spectrometer arranged to receive light emanating from the stone.

Optionally, the false detection device further comprises one or more optical elements configured to focus the emitted light onto a first focal location on the stone, and to collect light emanating from a second focal location on the stone and direct it to the spectrometer, wherein the first and second focal points overlap.

Optionally, the false detection device further comprises one or more optical fibres arranged to receive and propagate emitted light to the stone, and arranged to receive and propagate light to the spectrometer.

Optionally, the apparatus further comprises a fibre bundle through which are routed a plurality of individual fibres, each arranged to receive and propagate emitted light to the stone, or arranged to receive and propagate light emitted from the stone to the spectrometer.

Optionally, the distance from the false detection device to the centre of the at least one measurement location is in the range from 15 mm to 25 mm. Optionally, the false detection device is configured to measure for a time in the range from 2.5 ms to 22 ms.

Optionally, the dispenser system is configured to dispense the stone to a location if the false detection device determines that the stone does not comprise diamond material.

Optionally, the measurement system comprises a boart test device for determining whether each stone is boart.

Optionally, the boart test device comprises at least one light source configured to emit light and a camera configured to receive the emitted light propagated through the stone when at the at least one measurement location.

Optionally, the at least one light source comprises first and second light sources.

Optionally, the at least one light source and the camera are arranged on opposing sides of the at least one measurement location such that at least one light source is outside the field of view of the camera.

Optionally, the stone is at the at least one measurement location, the at least one light source is configured to emit light and the camera is configured to capture an image, the boart diamond test device further comprising a processor configured to determine the brightness of the image and identify the goods as boart diamond if the brightness is below a threshold value.

Optionally, the at least one light source and the camera are synchronised to operate in a pulsed mode.

Optionally, the dispenser system is configured to dispense the stone to a location if the boart test device determines that the stone comprises boart.

Optionally, the measurement system comprises a shape measurement device.

Optionally, the shape measurement device comprises a plurality of cameras each arranged to be facing the at least one measurement location.

Optionally, the plurality of cameras is arranged in a circular array.

Optionally, the plurality of cameras is arranged in a spherical array.

Optionally, the dispenser system is configured to drop the stone from a first level of the transport system, through the shape measurement device, to a second level of the transport system, and wherein the dispenser system is further configured to dispense the stone to a location in dependence on the determined shape of the stone.

Optionally, the transport system comprises a circular feeder hub rotatable with respect to the measurement system and the dispenser system.

Optionally, the apparatus further comprises a vacuum nozzle located at the periphery of the feeder hub and configured to pick up the stone by vacuum suction.

Optionally, the dispenser system comprises a plurality of dispenser valves configured to apply a blow-off pressure for overcoming the vacuum suction to dispense the goods.

Optionally, the apparatus further comprises a circular feeder bowl counter rotatable relative to the feeder hub and laterally offset from the feeder hub such that the peripheries of the feeder bowl and the feeder hub overlap, wherein the feeder bowl is configured to present the aggregate run of mine goods for the feeder hub to pick up and transport stones therefrom.

Optionally, the feeder hub is angled with respect to the feeder bowl.

Optionally, the apparatus further comprises a hopper configured to hold a supply of aggregate material and dispense the goods onto the feeder bowl.

Optionally, the transport system further comprises a multi-way carousel, and wherein the feeder hub is located at the first level of the transport system and the multi-way carousel is located at the second level of the transport system.

Optionally, the dispenser system is configured to dispense the stone from the multi-way carousel.

## Brief description of the drawings

Exemplary embodiments of the invention will now be described with reference to the accompanying drawings, in which:

Figure 1A is a schematic perspective view of a representation of a sorting apparatus;

Figure 1B is another schematic perspective view of the sorting apparatus of Figure 1A;

Figure 1C is a schematic plan view of the sorting apparatus of Figure 1A;

Figure 1D is a schematic elevation of the sorting apparatus of Figure 1A;

Figure 1E is another schematic elevation of the sorting apparatus of Figure 1A;

Figure 2 shows a schematic representation of a sorting apparatus;

Figure 3A shows a schematic representation of a false detection device;

Figure 3B shows a cross section through a section of optical fibre in a false detection device; and

Figure 4 shows a schematic representation of a boart detection device.

## Detailed description

Generally disclosed herein is a sorting apparatus for identifying and classifying diamond containing material in aggregate material. Exemplary sorting apparatuses may be configured to determine whether stones in the aggregate material comprise diamond material, determine whether any stone comprising diamond material is boart, and determine the shape of any non-boart diamond containing stones. The stone may be dispensed to one of a plurality of locations in dependence on the determination of the apparatus.

As used herein, the term "stone" encompasses any piece of aggregate material to be sorted. A stone may, for example, be a single piece of rock or any other non-diamond material, or a single piece of diamond containing material. The stone may be of any size and shape.

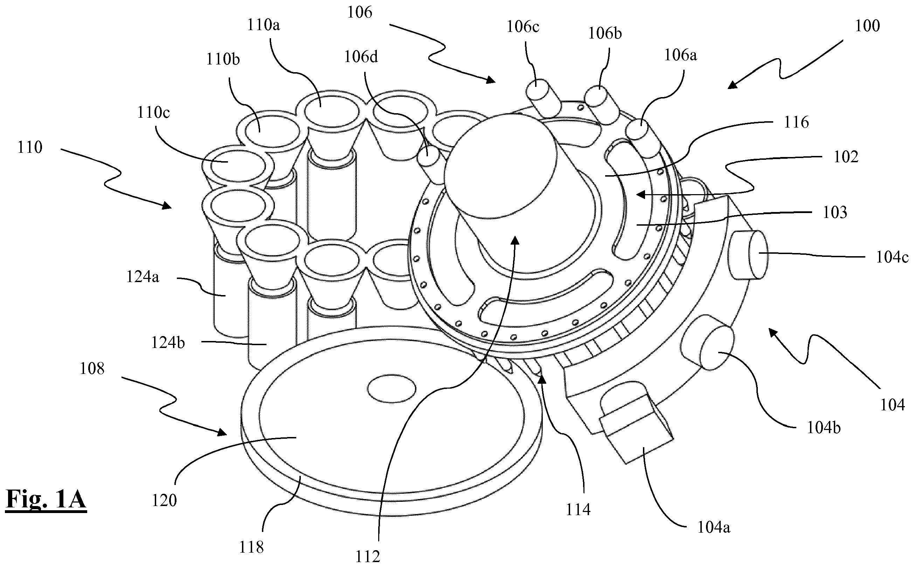

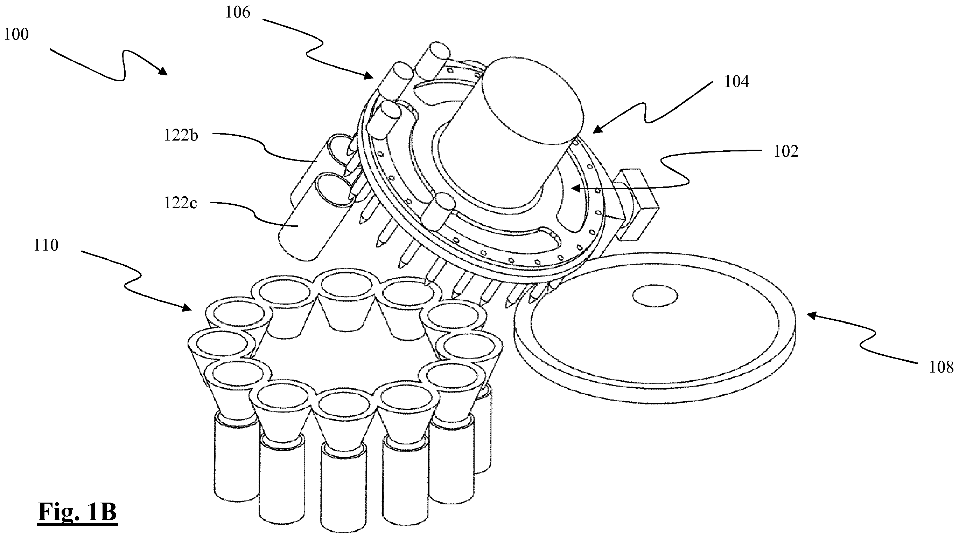

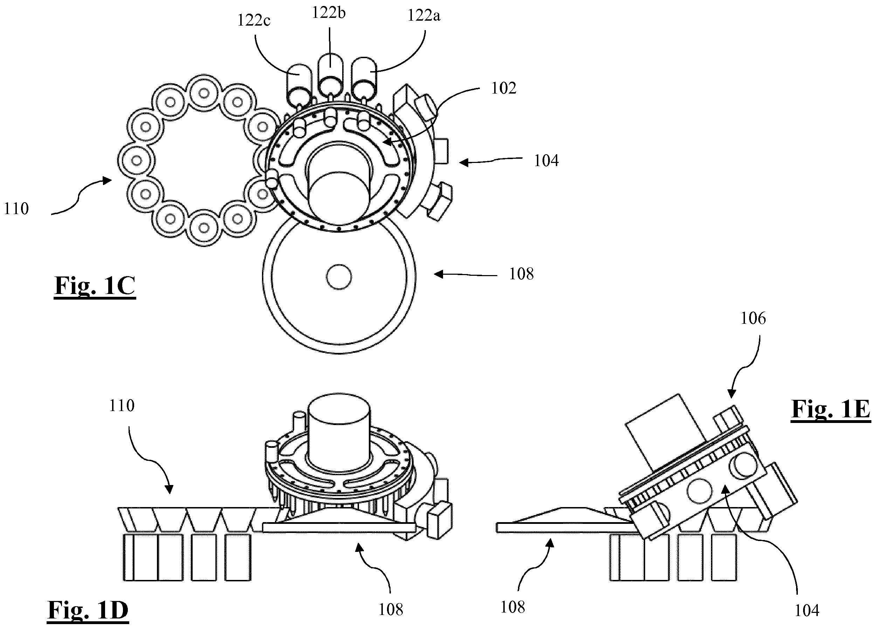

Figures 1A to 1E show schematic views of an exemplary sorting apparatus 100. The sorting apparatus 100 comprises a transport system 102, a measurement system 104 and a dispenser system 106. The sorting apparatus 100 further comprises a feeder bowl 108 and a multi-way carousel 110. In exemplary sorting apparatus 100, the transport system 102 comprises a feeder hub 103 and a multi-way carousel 110

The feeder hub 103 is circular and is rotatable on an axle 112. In the exemplary sorting apparatus 100, the feeder hub 103 rotates in a counter clockwise direction. The feeder hub 103 comprises a plurality of vacuum nozzles 114 located around the periphery of the feeder hub 103. The vacuum nozzles 114 are provided with a constant vacuum from a vacuum pump (not shown). The vacuum is applied to the nozzle 114 and a suction force is therefore delivered in the proximity of the nozzle end. The nozzles 114 are therefore able to pick up stones from the aggregate ROM goods in the feeder bowl 108. As the feeder hub 103 rotates the stones are transported to a plurality of measurement locations.

The measurement system 104 comprises a plurality of measurement devices 104a, 104b configured to determine parameters of the stone as it is transported to each of the measurement locations. The measurement device 104a is a false detection device for determining whether the stone comprises diamond material. The measurement device 104b is a boart test device for determining whether a stone is boart. In the exemplary measurement system 104 of Figures 1A to 1E, there is a spare slot 104c in which a third measurement device may be located. No measurement device is located in the spare slot. However, in other exemplary measurement systems 104, a third measurement device for determining the shape of the stones may be located in the spare slot 104c. The measurement system 104 is fixed. Therefore, as the feeder hub 103 rotates, the nozzles 114 and the stones transported thereon pass each of the measurement devices 104a-104b in turn.

The dispenser system 106 is configured to dispense the stone at one of a plurality of locations in dependence on the determination of the measurement system 104. The dispenser system comprises a plurality of dispenser valves 106a-106d positioned on the periphery of a dispenser plate 116. The dispenser valves 106a-106d are connected to a pressurised air supply (not shown) capable of delivering sufficient force to the stone to overcome the force applied by the vacuum. In this way, the dispenser valves 106a-106d are configured to blow the stone off the nozzle 114. The dispenser plate 116 and the dispenser valves 106a-106c are fixed. Therefore, as the feeder hub 103 rotates, the nozzles 114 and the stones transported thereon pass each dispenser valve 106a-106d in turn.

The feeder hub 103 is rotatable with respect to the measurement system 104 and the dispenser system 106.

The feeder bowl 108 is circular and has a trough 118 running circumferentially around its periphery and a domed region 120. The domed region 120 provides a cover for the fixings of the feeder bowl 108. The feeder bowl 108 is laterally offset from the feeder hub 103 such that the peripheries of each overlap. More specifically, the region of the feeder hub 103 comprising the nozzles 114 overlaps with the trough 118. The feeder bowl 108 is rotatable in the opposite direction (clockwise) to the feeder hub 103. This configuration allows the nozzles 114 to move at a similar rate as the stones in the trough 118 at the region where the feeder hub 103 and the feeder bowl 108 overlap, thereby aiding the nozzles 114 in picking up stones.

The feeder hub 103 is angled with respect to the feeder bowl 108. That is, the plane of rotation of the feeder hub 103 is angled with respect to the plane of rotation of the feeder bowl 108. This arrangement means that the nozzles 114 are lowered toward the trough 118 and then raised away from the trough 118 as the feeder hub 103 is rotated. In particular exemplary sorting apparatuses, the planes of rotation of both the feeder hub 103 and the feeder bowl 108 may be angled with respect to a horizontal plane. This arrangement allows for a more acute angle between the feeder hub 103 and the feeder bowl 108 without either having too great an angle to the horizontal plane and provides greater clearance between the ends of the nozzles 114 and the feeder bowl 108 as they are rotated away from the feeder bowl 108. In other exemplary sorting apparatuses 100, the plane of rotation of the feeder hub 103 may be parallel to the plane of rotation of the feeder bowl 108. In such apparatuses, other mechanisms, such as a cam arrangement may be used to lower the nozzles 114 as they pass over the trough 118.

The multi-way carousel 110 is positioned below the feeder hub 103. The multi-way carousel 110 comprises a number of pockets 110a, 110b, 110c... arranged in a circular array. The carousel 110 is offset from the feeder hub 103 such that the peripheries of each overlap. That is, the region of the feeder hub 103 comprising the nozzles 114 overlaps the region of the carousel 110 comprising the pockets 110a, 110b, 110c... More particularly, the overlap also coincides with the location of the dispenser valve 106d, such that activation of the dispenser valve 106d will drop the stone into a pocket 110a, 110b, 110c... of the carousel. The carousel is rotatable in the opposite direction (clockwise) to the feeder hub 103 toward the end of its rotational cycle, which allows the nozzles 114 to move at a similar rate to the pockets 110a, 110b, 110c... at the region where the feeder hub 103 and the carousel 110 overlap.

Additionally, the sorting apparatus 100 comprises a plurality of collecting bins 122a, 122b, 122c for receiving the stone after it has been dispensed from the feeder hub 103. The bins 122a, 122b, 122c are located below the dispenser valves 106a, 106b, 106c respectively.

In use, a quantity of pre-sized aggregate material is loaded into a hopper (not shown) positioned above the feeder bowl 108. Beneath the hopper is a pair of contra-rotating rollers which slowly feed out the ROM goods at a speed controlled by the level of ROM goods already located on the rotating feeder bowl 108 below. The ROM goods are delivered in a controlled way from the hopper to the feeder bowl 108 with feedback from a detector (not shown) positioned in close proximity to the feeder bowl 108 and configured to measures the level of the ROM goods in the feeder bowl 108. The detector measures the level of the ROM goods and directs the hopper to feed more or less goods to the feeder bowl 108. The feeder bowl 108 further comprises wipers or brushes (not shown) configured to constrain the ROM goods in the trough 118 of the feeder bowl 108.. This has the effect of lining up individual stones of the aggregate ROM goods with the nozzles 114 attached to the periphery of the rotating feeder hub 112 as they pass the overlapping region.

A constant vacuum is applied to the feeder hub 102 and thus to the nozzles 114. Therefore, as the nozzles 114 pass over the stones aligned in the trough 118, a single stone is picked up on the end of a nozzle 114.

The size of the nozzle 114 fitted to the feeder hub 103 is dependent on the size of ROM goods to be sorted. The apparatus 100 may be configured such that if two stones are picked up on one nozzle 114, they are knocked off the nozzle 114 before entering any measurement stage.

The stone that is now on the end of the nozzle 114 is transported as the feeder hub 103 is rotated. The stone is thereby transported to the measurement locations, located in proximity to the measurement system 104. In the sorting apparatus 100, there are three measurement locations located near the periphery of the feeder hub 103, each corresponding to the three measurement devices 104a-104c.

The stone is first transported past the false detection device 104a, where it is determined whether the stone includes diamond material, or is non-diamond material. The stone is then transported past the second measurement device 104b, where it is determined whether any identified diamond containing material is classified as boart.

The outputs from the measurement devices 104a-104c are passed to the dispenser system 106. The dispenser system 106 comprises a controller, which determines, in dependence on the output, at location the stone should be dispensed. The dispenser controller, which may be a microprocessor or other suitable electronic device, controls the operation of the dispenser valves 106a-106d. Each of the dispenser valves 106a-106c corresponds to a measurement device 104a-104c. That is, the operation of each of the dispenser valves 106a-106c is controlled in dependence on the output from the corresponding measurement device 104a-104c. A dispensing valve 106a-106c is therefore located after the corresponding measurement device 104a-104c in the direction of transport of the stone. In the exemplary sorting apparatus 100, all the measurement devices 104a-104c are located before the dispenser valves 106a-106c.

Once the stone has been subjected to the tests of the measurement devices 104a-104c, it is transported to the dispenser system 106. The outputs of all the measurement devices 104a-104c have been passed dispenser controller, which determines which of the dispenser valves 106a-106d to operate based on the results of the tests. If the first measurement device 104a determines a false detection, i.e. that the stone does not comprise diamond material, then the first dispenser valve 106a is operated to dispense the stone off the nozzle 114 and in to the first bin 122a. If the second measurement 104b device determines that the stone is boart, then the second dispenser valve 106b is operated to dispense the stone into the second bin 122b.

Stones that have not been dispensed from any of the previous dispenser valves are dispensed from the final dispenser valve 106d on the hub 103. Stones dispensed at dispenser valve 106d should be of gemstone quality. A constant air pressure is supplied at this dispenser valve 106d, causing all the stones to drop from the nozzle 114. The empty nozzle 114 then rotates further to overlap again with the trough 118 of the feeder bowl 108 and start the process again.

As described above, the sorting apparatus 100 is configured to identify diamond containing material and classify that diamond containing material as boart or gemstone quality diamond. In the first bin 122a is all the non-diamond material. In the second bin 122b is all the boart.

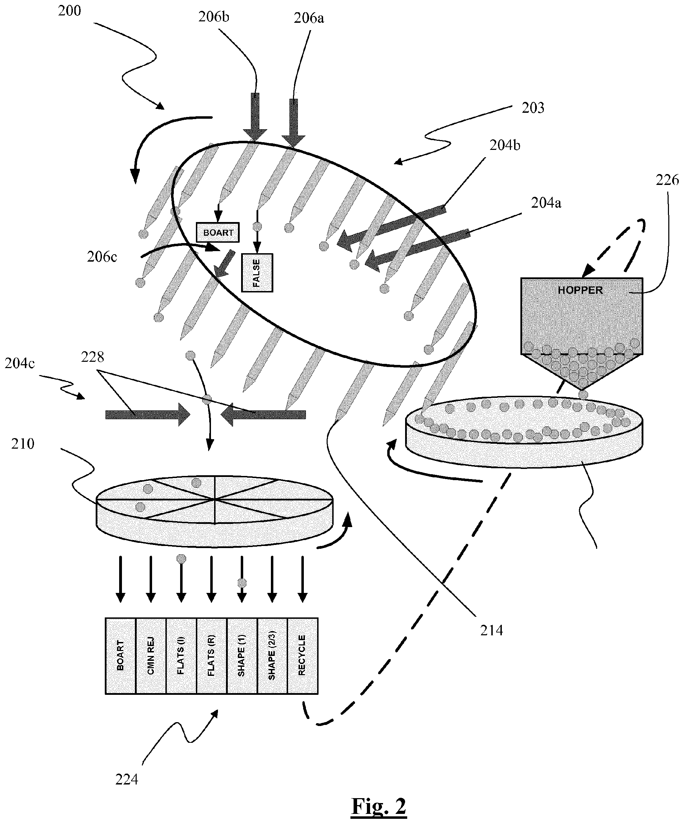

The stones dispensed from dispenser valve 106d fall into one of the socks 124a, 124b... of the multi-way carousel 110. As the stones fall, they pass a shape detection device (not shown in Figures 1A-1E), which forms part of the measurement system 104. This is explained in greater detail below with reference to Figure 2.

Figure 2 shows a schematic representation of a sorting apparatus 200. The configuration of the sorting apparatus 200 is similar to the configuration of the sorting apparatus 100, except that the sorting apparatus 200 comprises two measurement devices 204a, 204b positioned near the periphery of the feeder hub 203, and a third measurement device 204c is positioned between the feeder hub 203 and the multi-way carousel 210. Figure 2 also shows the hopper 226 not shown in Figures 1A-1E.

As with the sorting apparatus 100 described above, the first and second measurement devices 204a, 204b determine whether a stone comprises diamond material and whether the stone is boart respectively. The dispenser valves 206a and 206b are then operated by the dispenser controller (not shown) to dispense the stone accordingly.

Stones that do comprise diamond material and are not boart are dispensed by the final dispenser valve 206c, which is operated in the same way as the dispenser valve 106d of sorting apparatus 100. After being dispensed by the dispenser valve 206c, the stone is dropped through the measurement device 204c, which forms part of the measurement system and is a shape detection device. The shape detection device 204c comprises a plurality of cameras 228, each arranged to capture images of the stone as it passes through the measurement location. Figure 2 shows only two cameras. In exemplary sorting apparatuses, a plurality of cameras arranged in a circular array may be used. In other exemplary sorting apparatuses, the plurality of cameras may be arranged in other array configuration, such as a spherical array. The array of cameras scans the stone from multiple sides and grades each stone by shape. The shape of the stone determined by the measurement device 204c is passed to the dispenser controller. The stone continues to fall and is received in a pocket of the multi-way carousel 210. Each of the pockets of the carousel 210 has an independently operable opening at its base. The carousel 210 rotates and the pockets pass over a plurality of bins 222. The dispenser controller operates the base of each of the pockets to dispense the stone into the correct bin according to the determined shape of the stone. The bins 222 shown in Figure 2 refer to the categories that the stones could be separated into. The bins 222 comprise; a further boart bin (BOART) into which boart not dispensed earlier may be dispensed; a common rejections bin (CMN REJ); an Indian flats bin (FLATS(I)); a rejection flats bin (FLATS(R)); two types of shape bin; and a recycle bin.

The "recycle" bin is configured to return the stone to the hopper for a second pass through the sorting apparatus 100, 200. Therefore, if one or more of the tests applied by the measurement devices provides an indeterminate result, the stone may be returned to the hopper and the sorting apparatus 100, 200 may attempt to sort the stone a second time.

The sorting apparatuses 100, 200 disclosed herein thereby aggregate material from a diamond mine into non-diamond material, boart and gemstone quality diamonds, the gemstone quality diamonds being further sorted by their shape.

In other exemplary sorting apparatuses, the measurement devices 104a-104c, 204a-204b may be interleaved with the dispenser valves 106a-106c, 206a-206b. In such embodiments, the important factor is that the dispenser valve is positioned after its corresponding measurement device in the direction of rotation of the feeder hub. For example, the first dispenser valve may be located immediately after the first measurement device and, if a stone "fails" the first measurement device test, it will be dispensed by the first dispenser valve 106a immediately after the test and will, therefore, never reach the second measurement location.

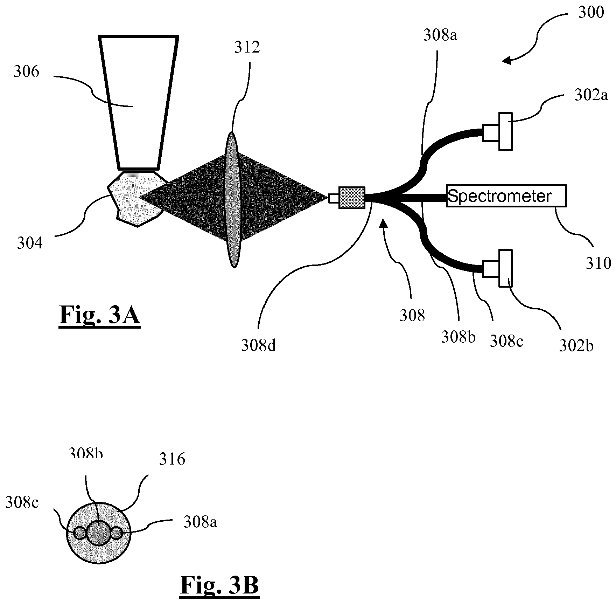

Figure 3A shows an exemplary false detection device 300, which detects diamond material using Raman spectroscopy. The device 300 comprises two laser light sources 302a, 302b arranged to emit light onto a stone 304. In specific exemplary devices 300, the laser devices 302a, 302b may emit light of a wavelength of 660 nm and have an output power of 130 mW. A trifurcated optical fibre bundle 308 comprises three fibres 308a, 308b, 308c. The first laser device 302a is optically connected to the first fibre 308a. The second laser device 302b is optically connected to the third fibre 308c. A spectrometer 310 is configured to receive light emanating from the stone 304 and is optically connected to the second fibre 308b. The three fibres 308a, 308b, 308c of the optical fibre 308 are joined at an output end section 308d. Figure 3B shows a cross sectional view through the output end section 308d of the bundle and is explained in greater detail below.

A lens 312 is located between the output 308d of the fibre bundle 308 and the stone 304. The lens is configured to focus light emitted from the first and third fibres 308a, 308c onto a focal point on the stone and to collect light from a similar focal point for delivery to the spectrometer 310. The spectrometer may be a photoluminescence spectrometer configured to operate with DiamondPLus® manufactured by the Diamond Trading Company.

Figure 3B is a cross section through the end section 308d of the fibre bundle, showing the three fibres 308a, 308b, 308c enclosed within an outer sheathing 316. In exemplary devices 300, the first fibre 308a and the third fibre 308c may have a diameter of about 100 μm and the second filament 314b may have a diameter of about 600 μm.

The stone 304 is being transported by a nozzle 306, which holds the stone 304 in place using vacuum suction as described above, and is located at a measurement location.

In use, the first and second laser devices 302a, 302b emit light, which is propagated by the first and third filaments 308a, 308c respectively. The light is focussed by the lens 312 onto a focal point located on the stone 304 when it is at the measurement location. Some of the light is inelastically scattered as a result of the Raman effect and re-emitted at a different wavelength - this can also be seen as a form of photoluminescence. Light emitted from the stone is collected from the focal point by the lens 312 and focussed onto the second optical fibre 308b. This light is propagated to the spectrometer 310, where it is analysed to determine whether the stone comprises diamond material. Raman scattering of light by diamond results in a characteristic peak in the emitted wavelength with a shift in wavenumber, compared to the excitation wavelength, of 1332 cm$^{-1}$, and if this peak is present the spectrometer confirms that diamond is present in the stone. If this peak is absent then the stone is classified as a false.

The distance from the output of the false detection device 300 to the measurement location at which the stone 304 is located may be in the range from 15 mm to 25 mm. In specific exemplary false detection devices, the distance from the output of the false detection device 300 to the measurement location at which the stone 304 is located may be 20 mm.

The false detection device 300 may be configured to measure for a time in the range from 2.5 ms to 22 ms. The measurement time is calculated in dependence on the size of the stone to be measured. A specific exemplary false detection device 300 may be configured to measure for 10 ms.

As specified above, the dispenser system 106, 206 determines the location at which the stone 304 is dispensed in dependence on the determination of the false detection device 300.

Other exemplary false detection devices may comprise a single laser device. Such devices may therefore comprise a bifurcated optical fibre having two filaments. Also, in other exemplary false detection devices, more than two laser devices may be used and the other features of the device altered accordingly.

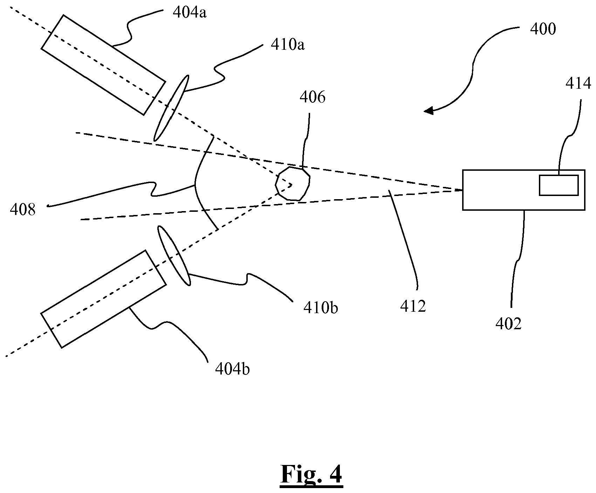

Figure 4 shows an exemplary boart detection device 400. The device 400 comprises a camera 402 and first and second LEDs 404a, 404b. The LEDs 404a, 404b are arranged to emit light onto a stone 406 when it is in the correct measurement location.

The angle 408 between the LEDs 404a, 404b is in the range from 40 degrees to 50 degrees, and in a specific example, 50 degrees. First and second lenses 410a, 410b are arranged to condition the output of the LEDs 404a, 404b. In particular, the first and second lenses 410a, 410b are configured to condition the light such that its divergence is at an angle of approximately 15 degrees. The field of view 412 of the camera 402 is sufficient to view the stone 406. The camera 402 may, for example, be a Firewire CCD camera, such as an AVT Stingray 146b.

The camera 402 has optics of a magnification such that a stone 406 of a size of interest occupies a significant portion of the field of view 412. In the arrangement of Figure 4, the field of view 412 is approximately of 22.4 mm diagonal. That is, the CCD used in the camera has dimensions of 17.9 mm x 13.4 mm. The camera optics should have a depth of field great enough that the stone 406 is in focus throughout its depth.

In an example of the device of Figure 4, the LEDs 404a, 404b used are high current LEDs (Lumiled, Luxeon Rebel, 50lm.LXM2-PD01-0050). Red LEDs were chosen since the emitted wavelength of light has a lower amount of absorption by diamond than shorter wavelengths of light. Therefore, the colour of diamond containing material will affect the light transmission less than at shorter wavelengths. Diamond absorption becomes even smaller as the wavelength moves into the infrared however, although the camera would work in the near infra-red, image resolution and sensitivity may be compromised and conventional lenses, designed for visible light, may perform less well.

In addition, the arrangement of the LEDs 404a, 404b and the field of view 412 of the camera 402 is such that the LEDs 404a, 404b are not in the field of view 412. This prevents light emitted directly from the LEDs 404a, 404b directly entering the camera 402.

The device 400 also comprises a processor 414 located in (or associated with) the camera 402 and configured to process images captured by the camera 402 to determine whether the stone 406 is boart.

In use, stones 406 are transported to the measurement location, which may be on vacuum nozzles 114, 214 as described above, to a position in the field of view 412 of the camera 402. The stone 406 is lit by the LEDs 404a, 404b, which are placed on the opposing side of the stone 406 to the camera 402 and are directed toward the stone. The LEDs 404a, 404b are in a position such that they are not in the field of view 412 of the camera 402 and are, therefore, not visible directly by it. The field of view 412 behind the stone 406 should be dark. The camera 402 captures an image of the stone 406 and measures the brightness of the image of the stone to determine whether it is boart. The brightness of the image is a factor of the clarity of the stone and, therefore, its ability to transmit light. Boart is less transmissive than gemstone quality diamond and the brightness of the illuminated stone 406 therefore indicates whether the stone 406 is boart or gemstone quality. If the brightness is below a threshold value then the stone 406 is determined to be boart. The threshold may be set at any suitable value dependent on the requirements of the device. For example, the threshold is dependent on the size of the stone 406 and/or the setting of the LEDs 404a, 404b and the camera 402.

Further quantification may include analysis of the image of the stone to identify inclusions. Further thresholds may be set for the density of inclusions to set a clarity threshold. This can be done by modifying a Fisher Linear Discriminant (FLD) analysis. The basic idea of FLD is to separate individual classes as far apart as possible. For boart detection, the objective is to separate the stones into two groups: boart and non-boart. There are three individual classes in the boart group and six in the non-boart group. When performing the analysis it is therefore desirable to cluster all of the boart classes together and all of the non-boart classes together, but maximise the distance between the two groups.

The vacuum nozzles 114, 214 may have a horizontal velocity of about 400 mm s$^{-1}$. In order that images of stones 406 captured by the camera 402 are not blurred particular exemplary boart detection devices 400 may be configured to pulse the illumination so that the motion of the stone is "frozen", i.e. by stroboscopic effect. The camera 402 and the LEDs 404a, 404b may therefore be synchronised to operate in a pulsed mode in which the stone is illuminated and the image is captured over a short time interval. Each illumination pulse may have a duration shorter than the time it takes the stone to transit across one or two pixels in the image. In the exemplary device 400, a single pixel of the camera 402 occupies about 0.01mm in object space at the measurement location. Therefore the illumination pulse duration should be

$$\frac{0.01}{400}s = 25\mu s$$

This ensures that no motion blurring is present in the image.

The camera shutter is triggered so that the strobe pulse fires within the exposure time of the camera 402. This also means that, since the stones 406 on their nozzles 114, 214 traverse the field during the camera exposure, the horizontal position of the diamond in the field can be adjusted by changing the point at which the strobe fires during the camera exposure time. Operating the camera 402 and the LEDs 404a, 404b in pulsed mode has the advantage of extending the lifespan of the LEDs 404a, 404b.

A controller (not shown) may be used to drive the LEDs 404a, 404b and may be configured to execute the strobing pulses. As well as being capable of delivering short duration, high current pulses, the controller may protect the LEDs 404a, 404b by preventing the duty cycle reaching a level where the LEDs 404a, 404b will be quickly degrade.

The arrangement described above produces images of stones that become brighter the more clear diamond material there is within a particular stone. This enables the categories to be distinguished using image processing techniques.

As described above, the dispenser system 106, 206 may be configured to dispense the stone 406 to a location in dependence on the determination by the boart detection device 400.

The skilled person will envisage further embodiments of the invention without departing from the scope of the appended claims.

**Claims**

1. A sorting apparatus (100) for classifying candidate rough gemstones in aggregate material, the apparatus comprising:

    a transport system (102) for individually transporting a stone from the aggregate material to at least one measurement location;
    a measurement system (104) configured to determine, at the at least one measurement location:

        the shape of the stone; and
        whether the stone comprises diamond material and, where the stone does comprise diamond material, whether the diamond material comprises boart;

    the apparatus further comprising a dispenser system (106) configured to dispense the stone from the transport system to one of a plurality of locations in dependence on the determination of the measurement system.

2. An apparatus according to claim 1, wherein the measurement system comprises a false detection device for determining whether the stone comprises diamond material.

3. An apparatus according to claim 2, wherein the false detection device is configured to determine whether the stone comprises diamond material using Raman spectroscopy, and comprises a light source arranged to emit light onto the stone, and a spectrometer arranged to receive light emanating from the stone.

4. An apparatus according to claim 3, wherein the false detection device further comprises one or more optical elements configured to focus the emitted light onto a first focal location on the stone, and to collect light emanating from a second focal location on the stone and direct it to the spectrometer, wherein the first and second focal locations overlap.

5. An apparatus according to claim 3 or 4, wherein the false detection device further comprises one or more optical fibres arranged to receive and propagate emitted light to the stone, and arranged to receive and propagate light to the spectrometer, and the apparatus optionally comprising a fibre bundle through which are routed a plurality of individual fibres, each arranged to receive and propagate emitted light to the
stone, or arranged to receive and propagate light emitted from the stone to the spectrometer.

6. An apparatus according to any of claims 2 to 5, wherein the distance from the false detection device to the centre of the at least one measurement location is in the range from 15 mm to 25 mm and/or wherein the false detection device is configured to measure for a time in the range from 2.5 ms to 22 ms and/or wherein the dispenser system is configured to dispense the stone to a location if the false detection device determines that the stone does not comprise diamond material.

7. An apparatus according to any preceding claim, wherein the measurement system comprises a boart test device for determining whether each stone is boart, and optionally wherein the boart test device comprises at least one light source configured to emit light and a camera configured to receive the emitted light propagated through the stone when at the at least one measurement location, and optionally wherein the at least one light source comprises first and second light sources.

8. An apparatus according to claim 7, wherein the at least one light source and the camera are arranged on opposing sides of the at least one measurement location such that at least one light source is outside the field of view of the camera and/or wherein, when the stone is at the at least one measurement location, the at least one light source is configured to emit light and the camera is configured to capture an image, the boart diamond test device further comprising a processor configured to determine the brightness of the image and identify the goods as boart diamond if the brightness is below a threshold value, and optionally wherein the at least one light source and the camera are synchronised to operate in a pulsed mode.

9. An apparatus according to any of claims 7 to 8, wherein the dispenser system is configured to dispense the stone to a location if the boart test device determines that the stone comprises boart.

**10.** An apparatus according to any preceding claim, wherein the measurement system comprises a shape measurement device, and optionally wherein the shape measurement device comprises a plurality of cameras each arranged to be facing the at least one measurement location, and optionally wherein the plurality of cameras is arranged in a circular array or wherein the plurality of cameras is arranged in a spherical array.

**11.** An apparatus according to claim 10, wherein the dispenser system is configured to drop the stone from a first level of the transport system, through the shape measurement device, to a second level of the transport system, and wherein the dispenser system is further configured to dispense the stone to a location in dependence on the determined shape of the stone.

**12.** An apparatus according to any preceding claim, wherein the transport system comprises a circular feeder hub rotatable with respect to the measurement system and the dispenser system, and optionally further comprising a vacuum nozzle located at the periphery of the feeder hub and configured to pick up the stone by vacuum suction, and optionally wherein the dispenser system comprises a plurality of dispenser valves configured to apply a blow-off pressure for overcoming the vacuum suction to dispense the goods.

**13.** An apparatus according to any of claim 12, further comprising a circular feeder bowl counter rotatable relative to the feeder hub and laterally offset from the feeder hub such that the peripheries of the feeder bowl and the feeder hub overlap, wherein the feeder bowl is configured to present the aggregate material for the feeder hub to pick up and transport stones therefrom, and optionally wherein the feeder hub is angled with respect to the feeder bowl and/or further comprising a hopper configured to hold a supply of aggregate material and dispense the material onto the feeder bowl.

**14.** An apparatus according to claim 12 or 13 when dependent on claim 10, wherein the transport system further comprises a multi-way carousel, and wherein the feeder hub is located at the first level of the transport system and the multi-way carousel is located at the second level of the transport system.

**15.** An apparatus according to claim 14, wherein the dispenser system is configured to dispense the stone from the multi-way carousel.

**Patentansprüche**

**1.** Sortiervorrichtung (100) zum Klassieren zu prüfender roher Edelsteine in Aggregatmaterial, wobei die Vorrichtung Folgendes umfasst:

eine Beförderungsanlage (102) zum einzelnen Befördern eines Steins von dem Aggregatmaterial zu wenigstens einer Messposition, eine Messanlage (104), die dafür konfiguriert ist, an der wenigstens einen Messposition Folgendes festzustellen:

die Form des Steins und ob der Stein Diamantmaterial umfasst und, wenn der Stein Diamantmaterial umfasst, ob das Diamantmaterial Bort umfasst,

wobei die Vorrichtung ferner eine Verteileranlage (106) umfasst, die dafür konfiguriert ist, den Stein von der Beförderungsanlage in Abhängigkeit von der Feststellung der Messanlage an eine von mehreren Positionen zu verteilen.

**2.** Vorrichtung nach Anspruch 1, wobei die Messanlage eine Falscherkennungseinrichtung zum Feststellen, ob der Stein Diamantmaterial umfasst, umfasst.

**3.** Vorrichtung nach Anspruch 2, wobei die Falscherkennungseinrichtung dafür konfiguriert ist, unter Verwendung von Raman-Spektroskopie festzustellen, ob der Stein Diamantmaterial umfasst, und eine Lichtquelle, die dafür angeordnet ist, Licht auf den Stein abzustrahlen, und ein Spektrometer, das dafür angeordnet ist, Licht zu empfangen, das von dem Stein abgestrahlt wird.

**4.** Vorrichtung nach Anspruch 3, wobei die Falscherkennungseinrichtung ferner ein oder mehrere optische Elemente umfasst, die dafür konfiguriert sind, das abgestrahlte Licht auf eine erste Brennpunktposition auf dem Stein zu bündeln und Licht, das von einer zweiten Brennpunktposition auf dem Stein abgestrahlt wird, zu sammeln und es zu dem Spektrometer zu richten, wobei die erste und die zweite Brennpunktposition einander überlappen.

**5.** Vorrichtung nach Anspruch 3 oder 4, wobei die Falscherkennungseinrichtung ferner eine oder mehrere Lichtleitfasern umfasst, die dafür angeordnet sind, abgestrahltes Licht zu empfangen und zu dem Stein weiterzuleiten, und dafür angeordnet sind, Licht zu empfangen und zu dem Spektrometer weiterzuleiten, und die Vorrichtung wahlweise ein Faserbündel umfasst, durch das mehrere einzelne Fasern geleitet werden, die jeweils dafür angeordnet sind, abgestrahltes Licht zu empfangen und zu dem Stein weiterzuleiten, oder dafür angeordnet sind, Licht, das von dem Stein abgestrahlt wird, zu empfangen und zu dem Spektrometer weiterzuleiten.

6. Vorrichtung nach einem der Ansprüche 2 bis 5, wobei die Entfernung von der Falscherkennungseinrichtung zur Mitte der wenigstens einen Messposition in dem Bereich von 15 mm bis 25 mm liegt und/oder wobei die Falscherkennungseinrichtung dafür konfiguriert ist, für eine Zeit in dem Bereich von 2,5 ms bis 22 ms zu messen, und/oder wobei die Verteileranlage dafür konfiguriert ist, den Stein an eine Position zu verteilen, falls die Falscherkennungseinrichtung feststellt, dass der Stein kein Diamantmaterial umfasst.

7. Vorrichtung nach einem der vorhergehenden Ansprüche, wobei die Messanlage eine Bortprüfeinrichtung zum Feststellen, ob jeder Stein Bort ist, umfasst und wahlweise wobei die Bortprüfeinrichtung wenigstens eine Lichtquelle, die dafür konfiguriert ist, Licht abzustrahlen, und eine Kamera, die dafür konfiguriert ist, das abgestrahlte Licht, das durch den Stein, wenn er sich an der wenigstens einen Messposition befindet, weitergeleitet wird, zu empfangen, umfasst und wahlweise wobei die wenigstens eine Lichtquelle eine erste und eine zweite Lichtquelle umfasst.

8. Vorrichtung nach Anspruch 7, wobei die wenigstens eine Lichtquelle und die Kamera derart auf gegenüberliegenden Seiten der wenigstens einen Messposition angeordnet sind, dass sich die wenigstens eine Lichtquelle außerhalb des Gesichtsfeldes der Kamera befindet, und/oder wobei, wenn sich der Stein an der wenigstens einen Messposition befindet, die wenigstens eine Lichtquelle dafür konfiguriert ist, Licht abzustrahlen und die Kamera dafür konfiguriert ist, ein Bild aufzunehmen, wobei die Bortprüfeinrichtung ferner einen Prozessor umfasst, der dafür konfiguriert ist, die Helligkeit des Bildes zu bestimmen und die Artikel als Bortdiamant zu identifizieren, falls die Helligkeit unterhalb eines Schwellenwertes liegt, und wahlweise wobei die wenigstens eine Lichtquelle und die Kamera synchronisiert sind, um in einem gepulsten Modus zu arbeiten.

9. Vorrichtung nach Anspruch 7 oder 8, wobei die Verteileranlage dafür konfiguriert ist, den Stein an eine Position zu verteilen, falls die Bortprüfeinrichtung feststellt, dass der Stein Bort umfasst.

10. Vorrichtung nach einem der vorhergehenden Ansprüche, wobei die Messanlage eine Formmesseinrichtung umfasst und wahlweise wobei die Formmesseinrichtung mehrere Kameras umfasst, die jeweils so angeordnet sind, dass sie der wenigstens einen Messposition gegenüberliegen, und wahlweise wobei die mehreren Kameras in einer kreisförmigen Gruppierung angeordnet sind oder wobei die mehreren Kameras in einer kugelförmigen Gruppierung angeordnet sind.

11. Vorrichtung nach Anspruch 10, wobei die Verteileranlage dafür konfiguriert ist, den Stein von einer ersten Ebene der Beförderungsanlage, durch die Formmesseinrichtung, auf eine zweite Ebene der Beförderungsanlage fallen zu lassen, und wobei die Verteileranlage ferner dafür konfiguriert ist, den Stein an eine Position in Abhängigkeit von der festgestellten Form des Steins zu verteilen.

12. Vorrichtung nach einem der vorhergehenden Ansprüche, wobei die Beförderungsanlage eine kreisförmige Zufuhrnabe umfasst, die in Bezug auf die Messanlage und die Verteileranlage drehbar ist, und die wahlweise ferner eine Unterdruckdüse umfasst, die am Umfang der Zufuhrnabe angeordnet und dafür konfiguriert ist, den Stein durch Unterdrucksog aufzunehmen, und wahlweise wobei die Verteileranlage mehrere Verteilerventile umfasst, die dafür konfiguriert sind, einen Abblasdruck zum Überwinden des Unterdrucksogs auszuüben, um die Artikel zu verteilen.

13. Vorrichtung nach Anspruch 12, die ferner eine kreisförmige Zufuhrschale umfasst, die im Verhältnis zu der Zufuhrnabe gegendrehbar und derart seitlich von der Zufuhrnabe versetzt ist, dass die Umfänge der Zufuhrschale und der Zufuhrnabe einander überlappen, wobei die Zufuhrschale dafür konfiguriert ist, das Aggregatmaterial für die Zufuhrnabe darzubieten, um Steine aus derselben aufzunehmen und zu befördern, und wahlweise wobei die Zufuhrnabe in Bezug auf die Zufuhrschale abgewinkelt ist und/oder die ferner einen Trichter umfasst, der dafür konfiguriert ist, eine Zufuhr von Aggregatmaterial zu enthalten und das Material auf die Zufuhrschale zu verteilen.

14. Vorrichtung nach Anspruch 12 oder 13, wenn abhängig von Anspruch 10, wobei die Beförderungsanlage ferner ein Mehrwegkarussell umfasst und wobei die Zufuhrnabe auf der ersten Ebene der Beförderungsanlage angeordnet ist und das Mehrwegkarussell auf der zweiten Ebene der Beförderungsanlage angeordnet ist.

15. Vorrichtung nach Anspruch 14, wobei die Verteileranlage dafür konfiguriert ist, den Stein von dem Mehrwegkarussell zu verteilen.

**Revendications**

1. Appareil de tri (100) pour classer des gemmes brutes candidates en matériau d'agrégat, l'appareil comprenant :

un système de transport (102) pour transporter individuellement une pierre du matériau d'agrégat vers au moins un emplacement de mesure ; un système de mesure (104) configuré pour déterminer, au niveau du au moins un emplacement de mesure :

la forme de la pierre ; et
si la pierre comprend du matériau de diamant, et, lorsque la pierre comprend du matériau de diamant, si le matériau de diamant comprend du bort ;

l'appareil comprenant en outre un système de distribution (106) configuré pour distribuer la pierre du système de transport vers un de plusieurs emplacements, en fonction de la détermination faite par le système de mesure.

**2.** Appareil selon la revendication 1, dans lequel le système de mesure comprend un dispositif de détection de faux pour déterminer si la pierre comprend du matériau de diamant.

**3.** Appareil selon la revendication 2, dans lequel le dispositif de détection de faux est configuré pour déterminer si la pierre comprend du matériau de diamant par l'intermédiaire d'une spectroscopie Raman, et comprend une source de lumière configurée pour émettre de la lumière sur la pierre, et un spectromètre configuré pour recevoir la lumière émanant de la pierre.

**4.** Appareil selon la revendication 3, dans lequel le dispositif de détection de faux comprend en outre un ou plusieurs éléments optiques configurés pour focaliser la lumière émise sur un premier emplacement sur la pierre, et pour collecter la lumière émise d'un deuxième emplacement focal sur la pierre et la diriger vers le spectromètre, les premier et deuxième emplacements se chevauchant.

**5.** Appareil selon les revendications 3 ou 4, dans lequel le dispositif de détection de faux comprend en outre une ou plusieurs fibres optiques configurées pour recevoir la lumière émise et la propager sur la pierre, et configurées pour recevoir la lumière et la propager vers le spectromètre, l'appareil comprenant optionnellement un faisceau de fibres à travers lequel sont acheminées plusieurs fibres individuelles, chacune étant configurée pour recevoir la lumière émise et la propager vers la pierre, ou configurées pour recevoir et propager la lumière émise par la pierre vers le spectromètre.

**6.** Appareil selon l'une quelconque des revendications 2 à 5, dans lequel la distance entre le dispositif de détection de faux et le centre du au moins un emplacement de mesure est comprise dans l'intervalle allant de 15 mm à 25 mm, et/ou dans lequel le dispositif de détection de faux est configuré pour mesurer pendant une durée comprise dans un intervalle allant de 2,5 ms à 22 ms, et/ou dans lequel le système de distribution est configuré pour distribuer la pierre vers un emplacement lorsque le dispositif de détection de faux détermine que la pierre ne comprend pas de matériau de diamant.

**7.** Appareil selon l'une quelconque des revendications précédentes, dans lequel le système de mesure comprend un dispositif de test de bort pour déterminer si chaque pierre est un bort, et dans lequel le dispositif de test de bort comprend optionnellement au moins une source de lumière configurée pour émettre de la lumière et une caméra configurée pour recevoir la lumière émise propagée à travers la pierre lorsqu'elle se trouve au niveau du au moins un emplacement de mesure, et dans lequel la au moins une source de lumière comprend optionnellement des première et deuxième sources de lumière.

**8.** Appareil selon la revendication 7, dans lequel la au moins une source de lumière et la caméra sont agencées sur des côtés opposés du au moins un emplacement de mesure, de sorte que la au moins une source de lumière se situe hors du champ de vision de la caméra, et/ou dans lequel, lorsque la pierre se trouve au niveau du au moins un emplacement de mesure, la au moins une source de lumière est configurée pour émettre de la lumière, la caméra étant configurée pour capturer une image, le dispositif de test de diamant bort comprenant en outre un processeur configuré pour déterminer la luminosité de l'image et l'identification des produits comme diamant bort lorsque la luminosité est inférieure à une valeur de seuil, et dans lequel la au moins une source de lumière et la caméra sont optionnellement synchronisées pour fonctionner dans un mode pulsé.

**9.** Appareil selon l'une quelconque des revendications 7 à 8, dans lequel le système de distribution est configuré pour distribuer la pierre vers un emplacement lorsque le dispositif de test de bort détermine que la pierre comprend un bort.

**10.** Appareil selon l'une quelconque des revendications précédentes, dans lequel le système de mesure comprend un dispositif de mesure de la forme, et dans lequel le dispositif de mesure de la forme comprend optionnellement plusieurs caméras agencées chacune de sorte à faire face audit au moins un emplacement de mesure, et dans lequel les plusieurs caméras sont optionnellement agencées dans un réseau circulaire, ou dans lequel les plusieurs caméras sont agencées dans un réseau sphérique.

11. Appareil selon la revendication 10, dans lequel le système de distribution est configuré pour faire tomber la pierre d'un premier niveau du système de transport, à travers le dispositif de mesure de la forme, vers un deuxième niveau du système de transport, et dans lequel le système de distribution est en outre configuré pour distribuer la pierre vers un emplacement en fonction de la forme déterminée de la pierre.

12. Appareil selon l'une quelconque des revendications précédentes, dans lequel le système de transport comprend un moyeu d'alimentation circulaire pouvant tourner par rapport au système de mesure et au système de distribution, et comprenant optionnellement en outre une buse à vide agencée au niveau de la périphérie du moyeu d'alimentation et configurée pour ramasser la pierre par aspiration sous vide, et dans lequel le système de distribution comprend optionnellement plusieurs soupapes de distribution configurées pour appliquer une pression de décharge afin de surmonter l'aspiration sous vide en vue de la distribution des produits.

13. Appareil selon la revendication 12, comprenant en outre un bol d'alimentation circulaire pouvant tourner à contre-sens par rapport au moyeu d'alimentation et décalé latéralement par rapport au moyeu d'alimentation, de sorte que les périphéries du bol d'alimentation et du moyeu d'alimentation se chevauchent, dans lequel le bol d'alimentation est configuré pour présenter le matériau d'agrégat au moyeu d'alimentation afin de ramasser et de transporter des pierres à partir de celui-ci, et dans lequel le moyeu d'alimentation est optionnellement incliné par rapport au bol d'alimentation, et/ou comprenant en outre une trémie configurée pour contenir une réserve de matériau d'agrégat et pour distribuer le matériau sur le bol d'alimentation.

14. Appareil selon les revendications 12 ou 13, dépendant de la revendication 10, dans lequel le système de transport comprend en outre un carrousel à plusieurs voies, et dans lequel le moyeu d'alimentation est agencé au premier niveau du système de transport, le carrousel à plusieurs voies étant agencé au deuxième niveau du système de transport.

15. Appareil selon la revendication 14, dans lequel le système de distribution est configuré pour distribuer la pierre à partir du carrousel à plusieurs voies.

**Fig. 1A**

EP 2 825 321 B1

Fig. 1B

**Fig. 1C**

**Fig. 1D**

**Fig. 1E**

**Fig. 2**

300

308a

302a

306

312

302b

304

310

Spectrometer

308d

308

308b  308c

**Fig. 3A**

308b  316

308c

308a

**Fig. 3B**

**Fig. 4**

**EP 2 825 321 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2199657 A
- GB 2225107 A